# EUROPEAN PATENT SPECIFICATION

(11) **EP 0 720 906 B1**
(45) Date of publication and mention of the grant of the patent: **24.01.2001**
(21) Application number: 95830210.1
(22) Date of filing: 19.05.1995
(51) Int. Cl.: B29C 51/46

(54) **Method for checking the integrity of receptacles of a thermoformed blister band**
Verfahren zum Kontrollieren der Unversehrtheit von Behältern von warmgeformten Blisterbändern
Procédé pour le contrôle de l'intégrité des réceptacles d'une bande pour blister thermoformé

(30) Priority: 20.05.1994 IT BO940234
(43) Date of publication of application: 10.07.1996
(73) Proprietor: MARCHESINI GROUP S.p.A., I-40065 Pian di Macina Pianoro (Bologna) (IT)
(72) Inventor: Monti, Giuseppe, I-Pianoro (Bologna) (IT)
(74) Representative: Dall'Olio, Giancarlo

(56) References cited:
- EP-A- 0 259 110
- EP-A- 0 435 836
- EP-A- 0 654 656
- PATENT ABSTRACTS OF JAPAN vol. 004, no. 022 (C-074), 23 February 1980 & JP 54 159470 A (SUMITOMO HEAVY IND LTD), 17 December 1979,
- PATENT ABSTRACTS OF JAPAN vol. 005, no. 062 (C-052), 25 April 1981 & JP 56 014404 A (TOSHIBA CORP), 12 February 1981,

## Description

Various methods for forming regular rows of receptacles in a band of thermoformable material are already known.

It is also known that the receptacles are aimed at receiving various articles, which in particular include pharmaceuticals such as capsules, tablets, pills and the like.

After filling, the blister band is then covered with a film of thermoweldable material and subsequently severed to obtain a series of like portions commonly called blister packs.

Bands of PVC, polypropylene or like materials, are used to make the blister packs. The above mentioned methods are generally carried out by machines which usually include band pre-heating means and a forming station, wherein the blisters or receptacles are made in the band.

An example of such machine can be found described in the publication EP-A-0 435 836, which relates to an equipment for thermoforming polypropylene bands.

Usually, as in the equipment of the EP-A-0 435 836, the forming station includes a pressing plate and a stationary plate, which co-operate to form the blisters. The plates feature respectively a series of recesses, designed to give shape to the receptacles of the band, and a series of corresponding holes, which match with the recesses and allow passage of compressed air.

Thermoforming of the band occurs when the band is clamped between the plates and air is ejected by the through holes of the stationary plate thus entering the counter-facing recesses.

More precisely, the compressed air jets coming out from the holes push corresponding areas of the band (the band is softened by suitable heating) into the recesses thus deep-drawing these areas until their surfaces adhere to the inner surfaces of the respective recesses.

At this time, air pressure is maintained for a pre-determined time until the blisters thus obtained become cool so as to keep their shape.

The action of the compressed air is not obstructed by the air in the recesses, because there are venting pinholes made in the recesses and leading to a series of channels opening to the outside.

According to an interesting different embodiment, before ejecting the compressed air towards the recesses, a pre-forming operation is performed by means of a plurality of pins (or small plungers) which slide in the holes and push the above mentioned areas of the band.

Possible impurities and/or defects present in the band material may bring about cracks, tearings, small breaks, microholes, stretches and so on, in the wall of the blisters, also because of the stress caused by the thermoforming performed as described above. All this prevents from obtaining air-tight blisters and causes the well known damages to items contained in faulty receptacles.

Furthermore, occurrence of the above mentioned problems is increased when rather deep and narrow receptacles are formed in the blister band, that is receptacles in which the ratio of the depth with respect to the width is bigger than in the receptacles usually formed.

At present, there are no methods and/or devices use in this field to check the integrity of the receptacles of a thermoformed blister band.

However, the publication JP 53-067278 disclosed a detecting unit for misblowing of injection blow molding machine. The purpose of the unit is to detect the misblowing of a resin. This is done by means of a compressed air path, whose one end opens to a blow mold and the other end connects to a flow control valve and an air pressure transducer via an outer pipe, at the bottom mold of an injecting blow molding machine.

A sleeve is inserted into the bottom mold of the movable platen, to which the blow mold is attached, to open the annular compressed air hole which connects to the outer pipe via the compressed air path. The pipe is equipped with the flow control valve and an air pressure transducer. When a closed-end parison is burst or damaged by the air blowing pressure, the air leaks into the mold and flows into the valve via the hole, and the transducer is operated to detect the misblowing and to stop the mold.

The object of the present invention is to find a remedy to the above mentioned problems, and in particular to set out a method that allows to detect possible presence of defects in the blisters, which defects could compromise tightness, when an elementary band thermoforming cycles reaches its completion.

With the proposed method, integrity check of walls forming the blisters, is more than acceptable, having regard to airtightness, although not absolute. Moreover, it is possible to take advantage of such check operation to issue, although not directly, a quality certificate of the blisters obtained in the band subjected to the aforementioned method.

The above mentioned objects are obtained in accordance with the contents of the claims.

The characteristic features of the present invention are pointed out in the following description with reference to the enclosed drawings, in which:

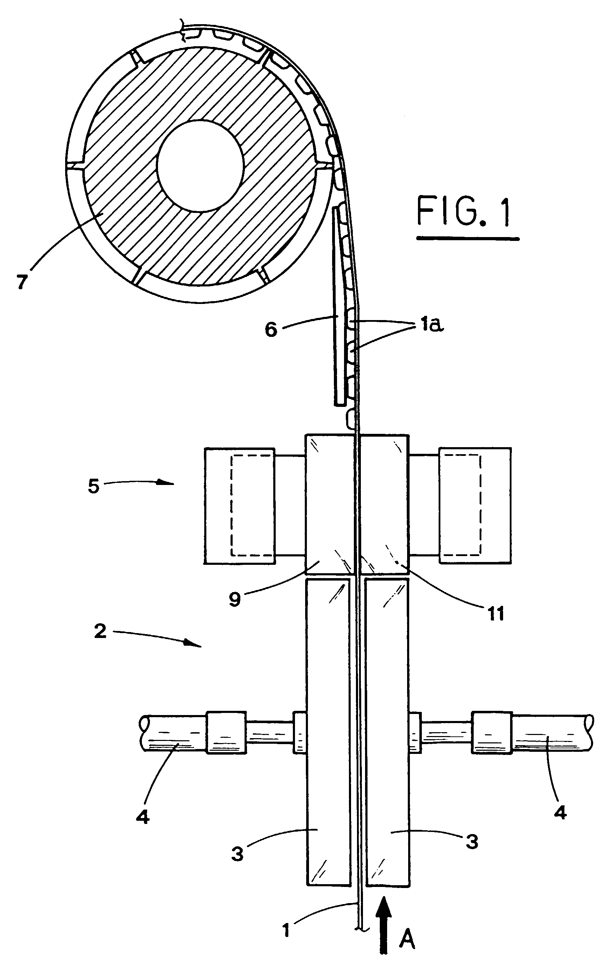

- Fig. 1 shows a schematic side view of the equipment for the thermoforming of bands of PVC, polypropylene or like materials;
- Fig. 2 shows a schematic view of the forming station and means connected thereto allowing for carrying out the proposed method;
- Figs. 3a, 3b shows a sectional view taken along line III-III of Fig. 2 with the die opened and closed respectively;
- Fig. 4 shows a sectional view taken along line IV-IV of Fig. 3a;
- Fig. 5 shows a possible course of the pressure of the air blown in the recesses of the forming station with reference to the time, considering only the trend of the values and not the values themselves.

With reference to the above mentioned figures, the equipment for thermoforming a PVC, polypropylene or like material band comprises means for pre-heating the band 1, generically indicated by numeral 2.

Such pre-heating means 2, include a pair of heating plates 3 suited to clamp the band 1 owing to the action of respective jacks 4.

A forming station 5 is located downstream of the pre-heating means 2, considering the advancement direction A, and is designed to form rows of blisters 1a in the band 1.

At the outlet of the forming station 5, the blister band, guided by a stationary guide plate 6, is trained by a trailing means 7 aimed at controlling the advancement in step of the band. The trailing means 7 is rotated in suitable time relationship with the previous pre-heating step and band forming step.

The forming station 5 is equipped with a die made up of a pressing plate 9 and a stationary plate 11. The pressing plate 9 features a series of recesses 10 which have a shape to be given to the blisters 1a, or receptacles, being formed in the band.

The stationary plate 11 has a series of holes 12 in which respective pins 13 slide to protrude therefrom.

The recesses 10 and the corresponding holes 12 are disposed so as to form, according to well-known techniques, a plurality of blister rows 1a in a direction transverse to the band 1.

The pins 13 are supported by a plate 14 movable inside a chamber 15 formed in the stationary plate 11 of the die; the movable plate 14 is operated by a jack 16 in a direction transverse to the plates themselves.

Moreover, in the chamber 15 a duct 17 has its outlet to convey therein a jet of compressed air aimed at carrying out, in a known way, complete forming of the blisters 1a.

Pinholes 20 are made in the pressing plate 9, in accordance with a known technique, to make the recesses 10 communicate with related channels 21.

More precisely, each recess has at least one of said pinholes which section is such that it does not provoke protrusions in the relative blisters 1a while thermoforming them.

The channels 21, only one of which is shown in the enclosed drawings, are made to communicate with outside by a vent duct 25; near the end 25a of such duct there is placed a pressure gauge 35 for measuring the pressure pf the vented air.

Advantageously, such pressure gauge send an electrical signal Vₛ corresponding to the detected value, to a control unit 50 designed to operate the equipment.

When the die is closed, the band 5 (softened since heated up to a suitable temperature by the heating plates 3), remains clamped between the plates 9, 11.

The jack 16 is activated in time relation with such clamping, that makes the pins 13 to come out of the holes 12, consequently drawing the areas H of the band 1 opposite to the recesses 10.

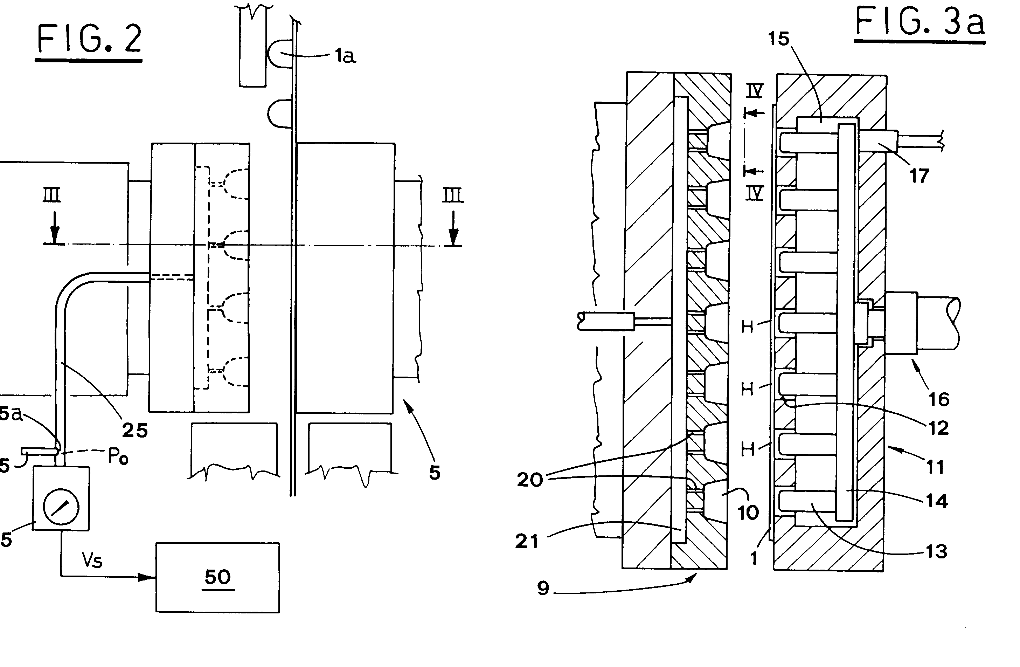

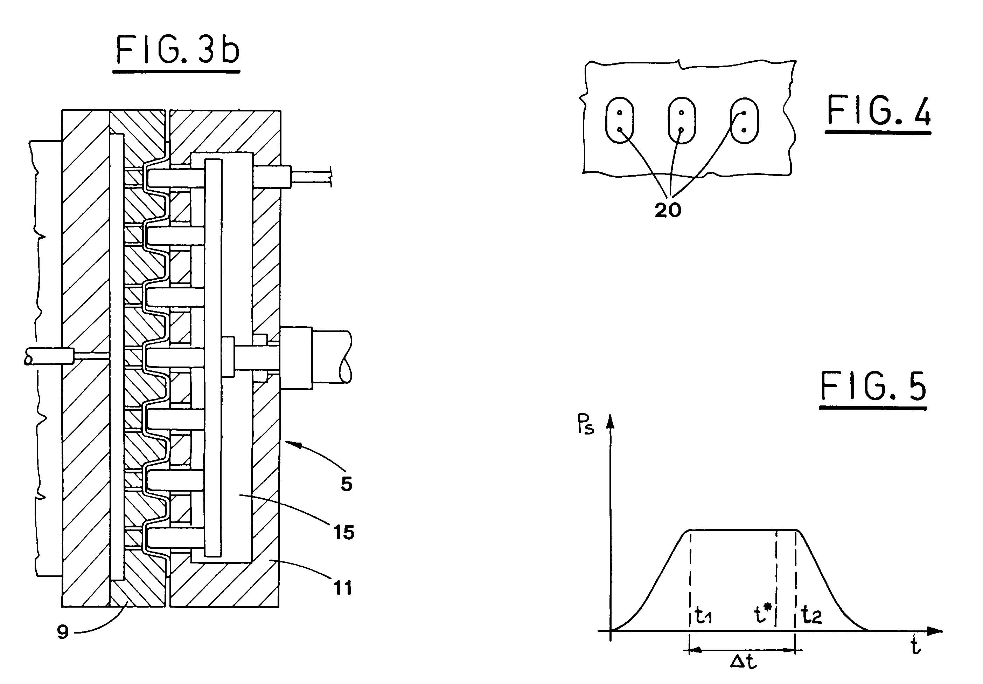

In a suitable time relation with this operation, the chamber 15 is fed with compressed air; the air jets going out through the holes 12 (the air pressure being in a range of 4-7 bar) push the areas portions H of the band (already pre-drawn) provoking further drawing of the same areas until they adhere to the surface of the respective chambers 10 (fig. 3b).

The drawing of the areas H up to obtaining the blisters 1a, is not obstructed by the air contained in the recesses 10 when the die has been closed; in fact this air is vented through the pinholes 20, channels 21 and duct 25.

The blowing in pressure pₛ (Fig. 5) is maintained for a predetermined time ▲t=t₂ - t₁ , so as to allow the just thermoformed blisters to cool and keep their shape.

If the blisters 1a are integral, i.e. without 1a-cerations, crackings, microfractures, microholes, tearings etc., when venting of the air contained in the recesses 10 has been completed, the relative pressure p₀ in correspondence with the terminal part 25a of the duct 25 must be zero.

Otherwise, if one or more blisters is damaged, a certain quantity of air will pass through the crackings, and/or lacerations, and/or microfractures, and/or microholes, and/or tearings, and will go out through the pinholes 20 and the channels 21 and the duct 25.

In this case the pressure p₀, different from zero, is measured by the pressure gauge 35 and detected by the control unit 50 that receives the signal Vₛ.

The control unit 50 checks the signal Vₛ in a predetermined moment t*, just before the time t₂, i.e. when the blowing in pressure is gradually zeroed.

If the pressure p₀ exceeds a predetermined value, the series of blisters 1a obtained with one forming cycle is rejected; this is an advantage also because the blisters that pass the check carried out in the above described way, are surely integral that can be certified in an unquestionable way.

It will be understood that carrying out of the subject method does not require any changes of thermoforming equipment or the forming cycle; it is enough to use a pressure gauge, and to request the control unit 50 to read the signal Vₛ in a moment t* before the end of the interval ▲t during which the blowing in pressure pₛ is kept practically constant.

The present method can be applied to any equipment for PVC, polypropylene and similar bands thermoforming; e.g. to the equipment of the type described in the introductory part, i.e. without pins that perform the pre-drawing.

## Claims

1. Method for checking the integrity of receptacles of a thermoformed PVC, polypropylene or like material blister band, the method being carried out by an equipment including:
means (2) for pre-heating said band (1);
a forming station (5) in which there is a die including a pressing plate (9) and a stationary plate (11), the said pressing plate (9) featuring a series of recesses (10) designed to give shape to the receptacles of the band (1), while the said stationary plate (11) has holes (12) positioned so as to match the said recesses (10), with compressed air flowing through the said holes (12) for a pre-determined period of time, when the said die is closed, to form transverse rows of blisters (1a) in the band, (1) with the help of the recesses (10);
a series of pinholes (20) made in the said pressing plate (9) to connect the said recesses (10) with channels (21) which open on a duct (25) leading to the outside;
the said method characterised in that the pressure p₀ present in a section close to the end (25a) of the duct (25), is measured and the value detected in a moment t* comprised in said period of time (▲t) in which compressed air is blown in the said recesses (10) just before the end of the same period of time (▲t), is compared with a pre-determined value that defines the limit of the pressure value under which the blisters obtained with a forming cycle are considered integral.

## Patentansprüche

1. Verfahren zum Kontrollieren der Unversehrtheit von Behältern eines warmgeformten Blisterbandes aus PVC, Polypropylen oder ähnlichen Materialien, wobei das Verfahren unter Verwendung einer Einrichtung durchgeführt wird, die die folgenden Komponenten aufweist:
Mittel (2) zum Vorheizen des Bandes (1);
eine Formstation (5), in welcher eine Form angeordnet ist, die eine Preßplatte (9) und eine stationäre Platte (11) aufweist, wobei die Preßplatte (9) eine Reihe von Vertiefungen (10) aufweist, die dafür vorgesehen sind, eine Gestaltung der Behälter des Bandes (1) vorzugeben, wobei die stationäre Platte (11) Ausnehmungen (12) aufweist, die derart angeordnet sind, daß diese zu den Vertiefungen (10) passen, und wobei Druckluft durch die Ausnehmungen (12) für eine vorgegebene Zeitspanne hindurchfließt, wenn die Form geschlossen ist, um eine transversale Reihe von Blistern (1a) im Band (1) unter Verwendung der Vertiefungen (10) herzustellen;
eine Serie von Stiftlöchern (20) sind in der Preßplatte (9) vorgesehen, um die Vertiefungen (10) mit Kanälen (21) zu verbinden, die in eine Röhre (25) einmünden, die in Richtung auf eine Umgebung führt;
das Verfahren ist dadurch gekennzeichnet, daß der Druck pₒ, der in einem Bereich mit einem geringen Abstand zu einem Ende (25a) der Röhre (25) herrscht, gemessen wird und daß der hierbei ermittelte Meßwert, der zu einem Zeitpunkt t* erfaßt wird, in einem Zeitintervall (▲t) bestehen bleibt, innerhalb dessen Druckluft in die Vertiefungen (10) geblasen wird, kurz bevor das Ende der Zeitspanne (▲t) erreicht wird, und daß der betreffende Meßwert mit einem vorgegebenen Wert verglichen wird, der die Grenze für den Druckbereich festlegt, unterhalb dessen die mit einem Formungsvorgang erzeugten Blister als unversehrt angesehen werden.

## Revendications

1. Procédé pour le contrôle de l'intégrité des réceptacles d'une bande pour blister thermoformé à partir de bandes en PVC, polypropylène ou matériaux similaires, réalisable au moyen d'une installation du type comprenant des moyens de préchauffage (2) de la bande (1), une station de moulage (5) fournie d'un moule constitué d'une plaque de pressage (9) présentant une série de logements (10) de forme complémentaire aux réceptacles (1a) à réaliser sur ladite bande (1), et une plaque fixe (11) intéressée par une série de trous (12), respectivement coaxiales aux susdits logements (10), à travers lesquels, à la suite de la fermeture du moule, de l'air comprimé transite pendant un intervalle de temps préfixé pour la formation sur ladite bande (1), en coopération avec lesdits logements (10), de files transversales desdits réceptacles, ladite plaque de pressage (9) intéressée par des orifices (20) aptes à relier lesdits logements (10) à des canalisations (21) reliées elles-mêmes au moins avec une conduite (25) débouchant à l'extérieur;
ledit procédé est caractérisé en ce qu'on mesure la pression pₒ en proximité de la région terminale de ladite conduite (25) et qu'on analyse la valeur relevée dans un temps t* compris dans ledit intervalle de temps Δt pendant lequel de l'air comprimé est insufflé dans lesdits logements (10), immédiatement avant la fin du même intervalle de temps Δt, pour le comparer avec une valeur préfixée qui définit la valeur limite au-dessous de la quelle les réceptacles obtenus avec un cycle de moulage sont considérés intègres.
